Europäisches Patentamt

European Patent Office

Office européen des brevets

(11) Veröffentlichungsnummer: **0 029 022 B1**

# EUROPÄISCHE PATENTSCHRIFT

(12)

(45) Veröffentlichungstag der Patentschrift:
27.04.83

(21) Anmeldenummer: 80890132.6

(22) Anmeldetag: 11.11.80

(51) Int. Cl.³: **B 60 V 1/00**

(54) Fahrzeug.

(30) Priorität: 12.11.79 AT 7222/79
17.07.80 AT 3705/80

(43) Veröffentlichungstag der Anmeldung:
20.05.81 Patentblatt 81/20

(45) Bekanntmachung des Hinweises auf die Patenterteilung:
27.04.83 Patentblatt 83/17

(84) Benannte Vertragsstaaten:
BE CH DE FR GB IT LI LU NL SE

(73) Patentinhaber: **Tuttinger, Heribert, Niederhofen 19,
A-8950 Stainach (AT)**

(72) Erfinder: **Tuttinger, Heribert, Niederhofen 19,
A-8950 Stainach (AT)**

(74) Vertreter: **Krause, Ernst, Dipl.-Ing. et al, Dipl.- Ing.
Krause Ernst Dipl. Ing. Casati Wilhelm Patentanwälte
Amerlingstrasse 8, A-1061 Wien (AT)**

(56) Entgegenhaltungen:
GB-A-1 221 941
US-A-3 118 513
US-A-3 177 959
US-A-3 189 112
US-A-3 280 930
US-A-3 291 236

ACTORUM AG

Fahrzeug

Die Erfindung betrifft ein Fahrzeug mit einem durch mindestens eine Luftschraube beaufschlagten, in einen bodenseitig offenen, sich in Fahrzeuglängsrichtung erstreckenden Raum (Kanal) einmündenden Strömungskanalrohr, dessen Achse im wesentlichen senkrecht zur Fahrzeuglängsachse angeordnet ist, sowie einem System von Schwenkklappen, deren Schwenkachsen symmetrisch zur Längsmittenebene des Fahrzeuges liegen, zur Steuerung des Vortriebes und einem ebenfalls von Schwenkklappen gebildeten Lenksystem, wobei sowohl das Schwenkklappensystem zur Vortriebssteuerung als auch die Schwenkklappen des Lenksystems im Strömungskanalrohr angeordnet sind.

Aus der DE-B-12 87 935 wurde ein Fahrzeug mit einem durch mindestens eine Luftschraube beaufschlagten Luftströmungskanalrohr bekannt, dessen Gehäuse von der Fahrzeuglängsachse abweicht, wobei ein System von Schwenkklappen zur Steuerung des Vortriebes und ein Lenksystem vorgesehen sind und das Strömungskanalrohr in einen bodenseitig offenen, sich in Fahrzeuglängsrichtung erstreckenden Raum (Kanal) einmündet. Hiebei kann der sich in Fahrzeuglängsrichtung erstreckende Raum heck- und bugseitig durch eine Klappe abgeschlossen werden. Diese Klappen können unabhängig voneinander betätigt werden, um eine Bewegung des Fahrzeuges nach vorne oder nach hinten zu bewirken. Bei dem bekannten Fahrzeug sind zwei solcher Kanäle nebeneinander angeordnet, so dass damit auch eine wirksame Trimmung des Fahrzeuges möglich ist, dadurch, dass die wirksame Länge der Kanäle durch Verschieben der Klappen mitsamt ihrer Schwenkachse in Längsrichtung der sich in Fahrzeuglängsrichtung erstreckenden Kanäle ausgeführt wird. Ausserhalb des in Längsrichtung des Fahrzeuges sich erstreckenden Kanales ist ein Seitenruder angeordnet, das um eine Vertikalachse schwenkbar ist und mit dem eine Lenkung des Fahrzeuges ausgeführt werden soll. Bei geringer Fahrzeuggeschwindikeit erscheint es fraglich, ob mit derart angeordneten Seitenrudern eine Lenkbewegung überhaupt möglich ist, da die Seitenruder ausserhalb des Einflussbereiches der von der Luftschraube erzeugten Strömung liegen. Um hier eine gewisse Verbesserung zu erreichen, wurde bei einer Anordnung gemäss der US-A-3 611 980 vorgeschlagen, vor den gemäss den Angaben dieser Druckschrift ebenfalls ausserhalb des Längskanales angeordneten Seitenrudern gegenläufig bewegbare Klappen anzuordnen, die sich in der Längsmittenebene des in Fahrzeuglängsrichtung verlaufenden Kanales treffen und solcherart es ermöglichen, dass auf die Seitenruder immer eine Strömung auftrifft, selbst wenn die Strömung im Kanal gering ist.

Bei weiteren bekannten Einrichtungen (DE-B-19 06 639) sind in Strömungskanälen Wandteile vorgesehen, die in den Strömungskanal hineinbewegt werden können, um eine Querschnittsveränderung und damit eine Änderung des Druckes und der Strömungsgeschwindigkeit im Kanal zu erreichen. Heckseitig ist hiebei ebenfalls eine Klappe vorgesehen, welche zur Regulierung des Vortriebes des Fahrzueges dient und mit der die nach hinten austretende Luftmenge aus dem sich in Längsrichtung des Fahrzeuges erstreckenden Kanal reguliert werden kann. Weiters sind in dem Kanal Seitenklappen vorgesehen, über welche die Strömung in den freien Raum ausserhalb des Fahrzeuges abgelenkt werden kann.

Weiters wurde es bekannt (GB-A-1 121 005), zur Bildung eines Luftkissens an einem Gerät bodenseitig Kanäle anzuordnen, deren Achsen vertikal verlaufen und die aus einem sich in Längsrichtung des Gerätes erstreckenden Kanal über Klappen mit dem Strömungsmedium versorgt werden können, wobei die Klappen Leitflächen bilden, längs welchen die Strömung im Hauptkanal in den vertikalen Kanal abgelenkt wird. Ein Vortrieb ist mit derartigen Einrichtungen nicht zu erzielen, vielmehr kann lediglich ein Abheben vom Boden erzielt werden.

Bei einem Fahrzeug der eingangs genannten Art wurde es aus der US-A-3 177 959 bekannt, die Schwenkachsen der Klappen zur Steuerung des Vortriebes senkrecht zu den miteinander fluchtenden Schwenkachsen der Klappen des Lenksystems anzuordnen. Damit liegen für die Vor- und Rückbewegung des Fahrzeuges im wesentlichen die gleichen Strömungsverhältnisse vor. Dies ist nicht unbedingt erwünscht, da das Fahrzeug ja primär für die Vorbewebung konzipiert ist.

Der Erfindung liegt nun die Aufgabe zugrunde, ein Fahrzeug der eingangs erwähnten Art so auszubilden, dass die Strömungsverhältnisse, die durch die Klappen beeinflusst werden, der Konzipierung des Fahrzeuges unter Betonung des Umstandes, dass das Fahrzeug vorwiegend für eine Bewegung nach vorne gedacht ist, besser als bisher gerecht zu werden.

Zur Lösung dieser Aufgabe schlägt die Erfindung vor, dass die beiden Schwenkklappen der Vortriebssteuerung um Achsen schwenkbar sind, die miteinander einen von 180° abweichenden, insbes. etwa 150° betragenden Winkel einschliessen. Mit dieser Anordnung der Schwenkklappen für die Vortriebsteuerung ist eine besonders wirkungsvolle Vortriebssteuerung möglich, wobei die Strömungsbeeinflussung unmittelbar im Bereich des Entstehens der Strömung erfolgen kann und die hiezu vorgesehenen Klappen in besonders günstiger Weise im Strömungskanalrohr angeordnet sind. Die erfindungsgemässe Ausgestaltung des Fahrzeuges ermöglicht eine wirkungsvolle Lenkung und gleichzeitig auch eine wirkungsvolle Steuerung der Vorbewegung bzw. Rückbewegung. Ein Schwebezustand kann ebenfalls erreicht werden.

In Weiterbildung des erfindungsgemässen Fahrzeuges ist vorgesehen, dass die Schwenkklappen des Lenksystems um zwei miteinander fluchtende Achsen gegensinnig bewegbar sind, die im wesentlichen in der Längsmittenebene des Fahrzeuges angeordnet sind. Mit einer solchen Anordnung lässt sich eine besonders günstige Lenkung erzielen. Die Steuerung für die Bewegung der Schwenkklappen des Lenksystems vereinfacht sich, wenn in besonderer Ausgestaltung der Erfindung die Schwenkklappen des Lenksystems bezüglich ihrer neutralen (mit der Strömungsrichtung im Strömungskanalrohr zusammenfallenden) Lage um gleiche Winkel ausschwenkbar sind. Der Bereich des Schwenkwinkels, innerhalb welchem die Schwenkklappen aus ihrer neutralen Lage ausschwenkbar sind, kann ±11° betragen, jedoch auch bis ±25° ausgeführt werden.

Den Bedürfnissen der Praxis entspricht es, wenn die Schwenkklappen des Vortriebssystems aus ihrer neutralen (mit der Strömungsrichtung im Strömungskanal zusammenfallenden) Lage um einen Winkel entgegen der Vorbewegungsrichtung ausschwenkbar sind, der kleiner ist als der Winkel, um den sie aus der neutralen Lage in Vorbewegungsrichtung des Fahrzeuges bewegbar sind. Dadurch wird erreicht, dass die maximale Vortriebsgeschwindigkeit grösser ist als die maximale Geschwindigkeit nach hinten. Beträgt der maximale Schwenkwinkel entgegen der Vorbewegungsrichtung 5°, so wird der maximale Schwenkwinkel in Vorbewegungsrichtung 12° ausgeführt. Die Winkel können jedoch auch 10 bzw. 30° betragen. Die Betätigung der Schwenkklappen des Lenksystems lässt sich besonders einfach bewerkstelligen, wenn in besonderer Ausgestaltung des erfindungsgemässen Fahrzeuges die Schwenkklappen des Lenksystems durch ein das Strömungskanalrohr aussen auf seinem halben Umfang umschliessendes Seil oder Gestänge bewegt werden, wobei das eine Ende des Seils oder Gestänges an der einen Schwenkklappe und das andere Ende des Seiles oder Gestänges an der anderen Schwenkklappe festgelegt ist. Das Strömungskanalrohr kann solcherart zumindest soweit es die Betätigung der Schwenkklappen des Lenksystems betrifft, von Einbauten freigehalten werden. Der Wirkungsgrad kann verbessert werden, wenn die der Achse des Strömungskanalrohres zugekehrten Enden der Schwenkklappen zur Bildung von Grenzschichtzäunen abgewinkelt sind. Hiebei kann bei den Klappen des Lenksystems die Abwinkelung etwa 103°, jedenfalls mehr als 90° und bei den Klappen des Vortriebssystems im wesentlichen 90° betragen. Um das Drehmoment der Luftschraube zu kompensieren, können in besonderer Ausgestaltung der Erfindung in dem Strömungskanalrohr insbes. dachförmig ausgebildete Stabilisierungsflächen angeordnet sein, wobei der Dachfirst bevorzugt radial zur Achse des Strömungskanalrohres oder parallel zu einer Radialen verläuft. Die Stabilisierungsflächen können zugleich als Halterung für das Antriebsaggregat dienen, so dass sie eine Doppelfunktion erfüllen können.

Die Anordnung der Stabilisierungsflächen erfolgt bevorzugt so, dass der First der Stabilisierungsflächen in Strömungsrichtung jeweils hinter den Schwenkachsen der Schwenkklappen des Vortriebs- und Lenksystems liegt. Dadurch wird eine ungünstige Beeinflussung der Strömung im Kanalrohr durch die Stabilisierungsflächen sicher hintangehalten.

In besonderer Ausgestaltung des erfindungsgemässen Fahrzeuges sind die Stabilisierungflächen schwenkbar an den Klappen im Abstand von deren Schwenkachsen angelenkt und an einem justierbaren, insbes. von einer Schraube gebildeten Anschlag abstützbar. Damit wird eine optimale Anpassung der Stabilisierungsflächen an die jeweiligen Strömungsverhältnisse im Strömungskanalrohr bewirkt.

Die Erfindung wird nachstehend anhand der Zeichnungen beispielsweise näher erläutert. Es zeigt:

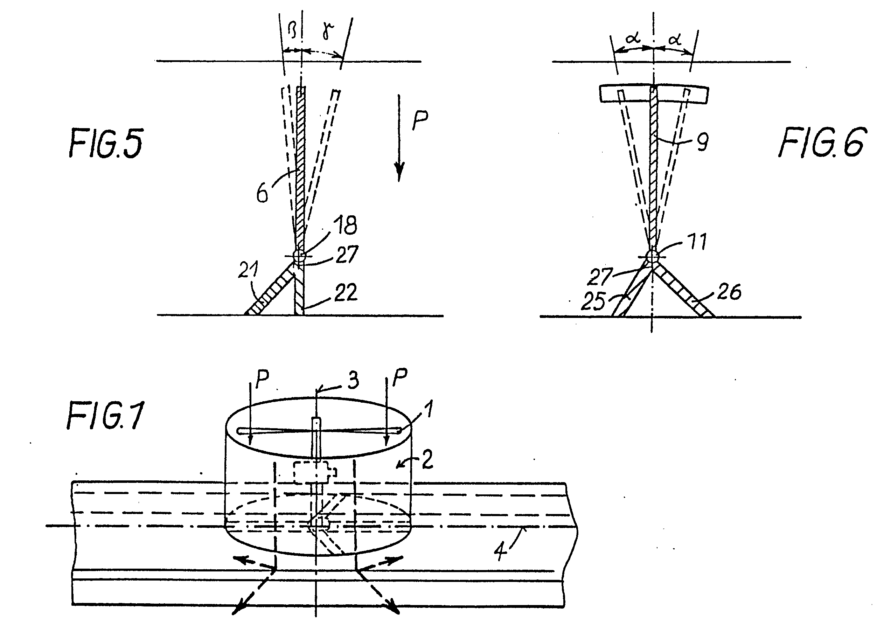

Fig. 1 schaubildlich einen Ausschnitt des erfindungsgemässen Fahrzeuges,
Fig. 2 eine Draufsicht auf Fig. 1, wobei lediglich das Strömungskanalrohr mit seinen Einbauten dargestellt ist,
Fig. 3 einen Schnitt entlang der Linie III–III in Fig. 2,

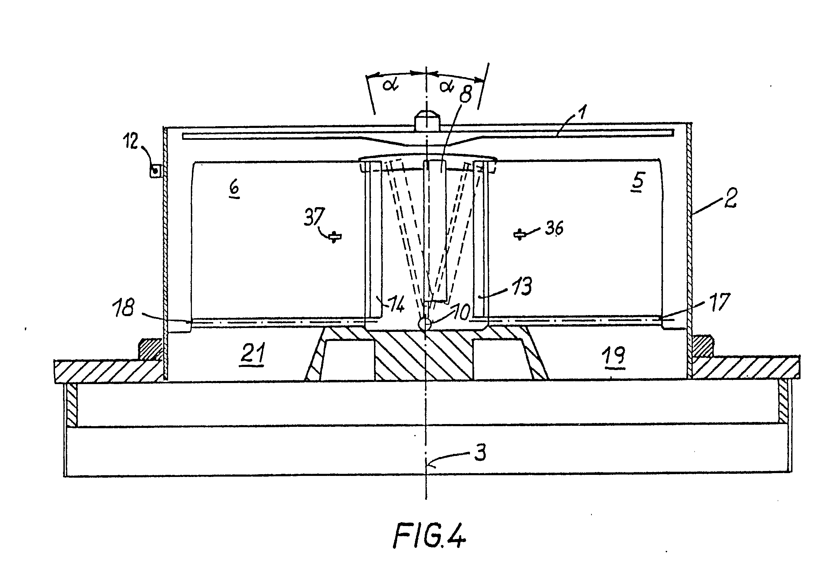

Fig. 4 einen Schnitt entlang der Linie IV–IV in Fig. 2,
Fig. 5 einen Schnitt entlang der Linie V–V in Fig. 2,
Fig. 6 einen Schnitt entlang der Linie VI–VI in Fig. 2,
Fig. 7 ein gegenüber der Ausführung der Fig. 6 modifiziertes Detail eines erfindungsgemässen Fahrzeuges (Schnitt VII–VII),
Fig. 8 eine Anordnung gemäss Fig. 7 in geänderter Stellung der Schwenkklappe, und
Fig. 9 eine Draufsicht auf ein Detail aus Fig. 7.

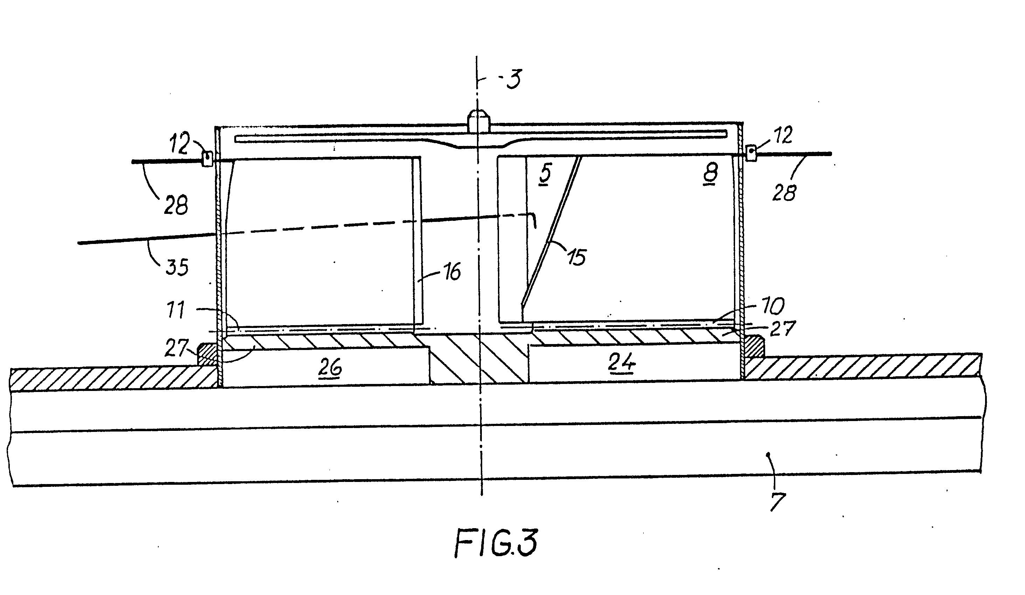

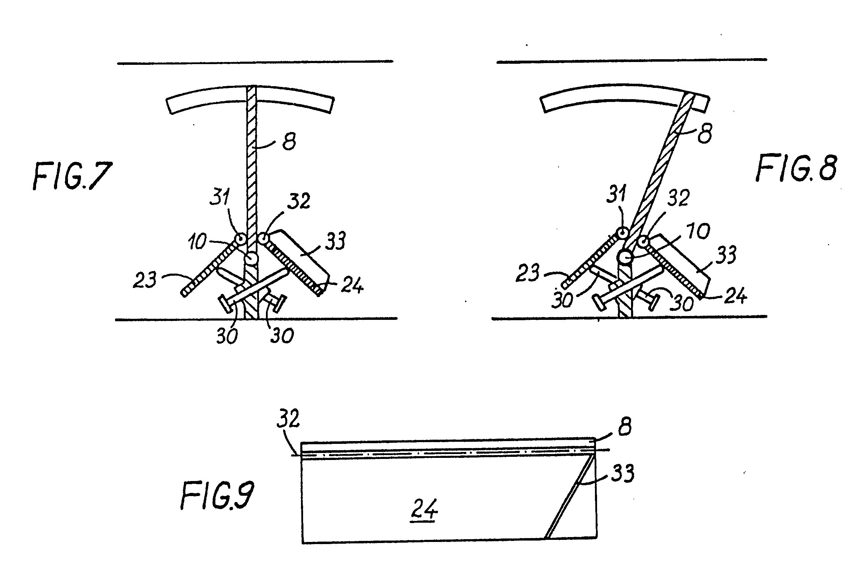

Das erfindungsgemässe Fahrzeug ist mit einem Strömungskanalrohr 2 versehen, das durch mindestens eine Luftschraube 1 beaufschlagt wird. Die Achse des Strömungskanalrohres weicht von der Fahrzeuglängsachse 4 ab, schliesst mit der Fahrzeuglängsachse bevorzugt einen Winkel von 90° ein. Das Strömungskanalrohr 2 mündet in einen beidseitig offenen, sich in Fahrzeuglängsrichtung 4 erstreckenden Raum 7 ein. Bei dem erfindungsgemässen Fahrzeug ist ein System von Schwenkklappen 5, 6 zur Steuerung des Vortriebes und ein System von Schwenkklappen 8, 9 zur Lenkung des Fahrzeuges vorgesehen. Im Strömungskanalrohr 2 wird hiebei sowohl das Schwenkklappensystem zur Vortriebssteuerung als auch das Schwenkklappensystem 8, 9 angeordnet. Die Schwenkklappen 8, 9 des Lenksystems sind, wie Fig. 3 erkennen lässt, um zwei miteinander fluchtende Achsen 10, 11 bewegbar gelagert. Die Schwenkachsen 10, 11 sind dabei im wesentlichen in der Längsmittenebene des Fahrzeuges angeordnet. Die Schwenkklappen 8, 9 des Lenksystems sind gegensinnig zueinander bewegbar, wobei zur Betätigung dieser Schwenkklappen 8, 9 ein Seil 12 oder Gestänge vorgesehen ist, welches das Strömungskanalrohr 2 aussen auf seinem halben Umfang umschliesst, wobei das eine Ende des Seiles 12 an der einen Schwenkklappe 8 und das andere Ende des Seiles 12 an der Schwenkklappe 9 befestigt ist. Die Verstellkraft kann hiebei an einem Stab 28 od.dgl. angreifen. Die Betätigung kann – sofern es sich bei dem erfindungsgemässen Fahrzeug um ein Modellfahrzeug handelt – durch einen ferngesteuerten Motor erfolgen, bei anderen Fahrzeugen wird zweckmässig zur Betätigung der Schwenkklappen 8, 9 des Lenksystems ein Servomotor vorgesehen werden. Selbstverständlich ist auch die Betätigung über einen üblichen Bowdenzug möglich. Zur Führung des Seiles 12 sind aussen am Strömungskanalrohr drei winkelförmige Führungen 29 vorgesehen. Die Schwenkklappen 8, 9 des Lenksystems sind aus ihrer neutralen Stellung um gleiche Winkel α ausschwenkbar (Fig. 6). Der Winkel α kann 11° betragen, jedoch auch bis 25° vergrössert werden.

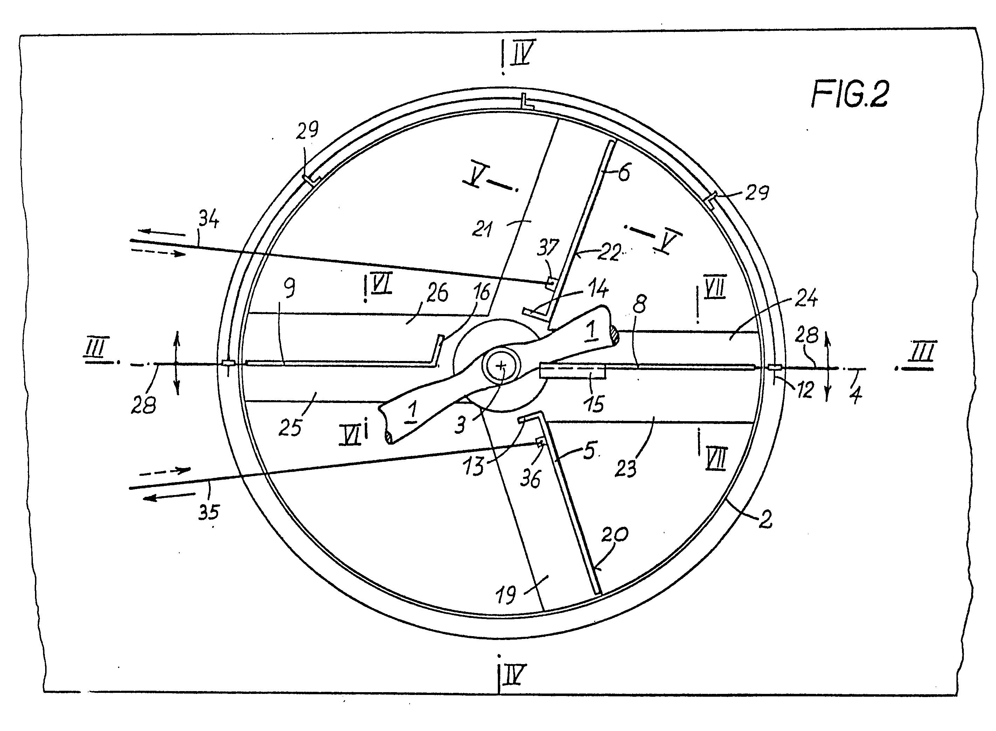

Wie Fig. 2 erkennen lässt, sind die beiden Schwenkklappen 5, 6 der Vortriebssteuerung um Achsen 17, 18 (Fig. 5) schwenkbar, die miteinander einen von 180° abweichenden Winkel einschliessen. Im dargestellten Ausführungsbeispiel beträgt dieser Winkel ungefähr 150°. Die Schwenkachsen 17, 18 der beiden Schwenkklappen 5, 6 der Vortriebssteuerung sind symmetrisch zur Längsmittenebene des Fahrzeuges angeordnet.

In Fig. 5 ist mit β jener maximale Schwenkwinkel eingezeichnet, um den die Schwenkklappen 5, 6 des Vortriebssystems aus ihrer neutralen (mit der Strömungsrichtung im Strömungskanal zufliessenden) Lage entgegen der Vorbewegungsrichtung ausschwenkbar sind. Der Winkel β kann 5° betragen. In Richtung der Vorbewegungsrichtung des Fahrzeuges sind die Schwenkklappen 5, 6 des Vortriebssystems um einen Winkel γ ausschwenkbar, der 12° betragen kann. Jedenfalls ist der Winkel β kleiner als der Winkel γ zu wählen. In einem anderen Ausführungsbeispiel kann einem Winkel β von 10° ein Winkel γ von 30° zugeordnet werden.

Die der Achse 3 des Strömungskanalrohres 2 zugekehrten Enden aller Schwenkklappen 5, 6 bzw. 8, 9 sind abgewinkelt zwecks Bildung von Grenzschichtzäunen. Bei den Klappen 8, 9 des Lenksystems beträgt hiebei die Abwinkelung mehr als 90°, bevorzugt 103°, wogegen für die Klappen 5, 6 des Vortriebssystems eine Abwinkelung von im wesentlichen 90° gewählt wird. Zur Stabilisierung des Fahrzeuges gegen das Drehmoment der Luftschraube 1 sind in dem Strömungskanalrohr 2 Stabilisierungsflächen 19 bis 26 angeordnet. Diese Stabilisierungsflächen sind dachförmig ausgebildet, und der Dachfirst 27 verläuft radial zur Achse des Strömungskanalrohres 2 bzw. parallel zu ihrer Radialen.

Der First 27 der Stabilisierungsflächen 19 bis 26 liegt – gesehen in Strömungsrichtung – jeweils hinter den Schwenkachsen 17, 18 bzw. 10, 11 der Schwenkklappen 6, 5 des Vortriebs- bzw. der Schwenkklappen 8, 9 des Lenksystems.

Aus Fig. 5 ist ersichtlich, dass bei jenen dachförmigen Stabilisierungsflächen 19 bis 22, deren First 27 unterhalb der Klappen 5, 6 des Vortriebssystems gelegen ist, eine Dachfläche 20 bzw. 22 mit der Strömungsrichtung P im Strömungskanalrohr 2 zusammenfällt. Die Stabilisierungsflächen 19 bis 26 können auch schwenkbar an den Klappen 5, 6, 8, 9 in Abstand von deren Schwenkachsen 10, 11, 17, 18 angelenkt sein und an einem justierbaren, insbesondere von einer Schraube 30 gebildeten Anschlag abstützbar sein.

In den Fig. 7 und 8 ist für die Klappe 8 des Steuerungssystems die schwenkbare Anlenkung der Stabilisierungsflächen 23, 24 näher gezeigt, wobei aus Fig. 8 die Stellung ersichtlich ist, die die Stabilisierungsflächen 23, 24 nach einer Verschwenkung der Schwenkklappe 8 des Steuerungssystems aus der in Fig. 7 gezeigten neutralen Lage einnehmen. Die Schwenklager der Stabilisierungsflächen 23, 24 sind in den Fig. 7 und 8 mit 31, 32 bezeichnet. Aus Fig. 9 ist eine Draufsicht auf die Stabilisierungsfläche 24 gezeigt, die mit einem Grenzschichtzaun 33 versehen ist.

Bei dem erfindungsgemässen Fahrzeug wird der Auftrieb durch eine Luftschraube 1 erzeugt. Die Luftschraube 1 saugt hiebei in das Strömungskanalrohr 2 von oben Luft ein und stösst sie nach unten aus. Der Luftstrom trifft im Zuge seiner Strömung durch das Strömungskanalrohr 2 auf die vier Schwenkklappen 5, 6 sowie 8, 9. Die Vorwärtsbewegung des Fahrzeuges ergibt sich hiebei aufgrund der Auslenkung der Schwenkklappen 5 und 6 aus ihrer neutralen Stellung, in der sie jeweils in Richtung der Strömung liegen. Zur Betätigung der Schwenkklappen 5, 6 sind hiebei Gestänge 34, 35 oder Seile vorgesehen. Die Gestänge 34, 35 sind hiebei in Halterungen 36, 37 in den Schwenkklappen 5, 6 verankert, insbesondere eingehängt. Die Geschwindigkeit des Fahrzeuges hängt vom Neigungswinkel der stufenlos verstellbaren Schwenkklappen 5, 6 ab. Werden die Schwenkklappen 5, 6 so geschwenkt, dass sie mit der Strömungsrichtung im Strömungskanalrohr zusammenfallen, also keine Ablenkung der Strömung bewirken, so wird das Luftkissenfahrzeug je nach Zustand entweder abgebremst oder in Schwebe gehalten. Eine langsame Rückwärtsfahrt des Fahrzeuges wird erreicht, wenn die Schwenkklappen 5, 6 nach hinten (in Fig. 2 mit dem dort sichtbaren oberen Rand nach links) geneigt werden.

Um die Hochachse wird das erfindungsgemässe Fahrzeug durch die beiden Schwenkklappen 8, 9 gelenkt, und zwar ebenfalls stufenlos. Das Antriebsaggregat kann an den Stabilisierungsflächen 19 bis 26 abgestützt werden.

## Patentansprüche

1. Fahrzeug mit einem, durch mindestens eine Luftschraube (1) beaufschlagten, in einen bodenseitig offenen, sich in Fahrzeuglängsrichtung erstreckenden Raum (Kanal) (7) einmündenden Strömungskanalrohr (2), dessen Achse (3) im wesentlichen senkrecht zur Fahrzeuglängsachse (4) angeordnet ist, sowie einem System von Schwenkklappen (5, 6), deren Schwenkachsen (17, 18) symmetrisch zur Längsmittenebene des Fahrzeuges liegen, zur Steuerung des Vortriebes und einem ebenfalls von Schwenkklappen (8, 9) gebildeten Lenksystem, wobei sowohl das Schwenkklappensystem (5, 6) zur Vortriebssteuerung als auch die Schwenkklappen (8, 9) des Lenksystems im Strömungskanalrohr (2) angeordnet sind, dadurch gekennzeichnet, dass die beiden Schwenkklappen (5, 6) der Vortriebssteuerung um Achsen (17, 18) schwenkbar sind, die miteinander einen von 180° abweichenden, insbes. etwa 150° betragenden Winkel einschliessen.

2. Fahrzeug nach Anspruch 1, dadurch gekennzeichnet, dass die Schwenkklappen (8, 9) des Lenksystems um zwei miteinander fluchtende Achsen (10, 11) gegensinnig bewegbar sind, die im wesentlichen in der Längsmittenebene des Fahrzeuges angeordnet sind.

3. Fahrzeug nach Anspruch 1 oder 2, dadurch gekennzeichnet, dass die Schwenkklappen (8, 9) des Lenksystems um bezüglich ihrer neutralen [mit der Strömungsrichtung im Strömungskanalrohr (2) zusammenfallenden] Lage gleiche Winkel (α) ausschwenkbar sind.

4. Fahrzeug nach einem der Ansprüche 1 bis 3, dadurch gekennzeichnet, dass die Schwenkklappen (5, 6) des Vorriebssteuerungssystems aus ihrer neutralen (mit der Strömungsrichtung im Strömungskanal zusammenfallenden Lage) um einen Winkel (β), entgegen der Vorbewegungsrichtung ausschwenkbar sind, der kleiner ist als der Winkel (γ), um den sie aus der neutralen Lage in Vorbewegungsrichtung des Fahrzeuges bewegbar sind.

5. Fahrzeug nach einem der Ansprüche 1 bis 3, dadurch gekennzeichnet, dass die Schwenkklappen (8, 9) des Lenksystems durch ein das Strömungskanalrohr (2) aussen auf seinem halben Umfang umschliessendes Seil (12) oder Gestänge bewegt werden, wobei das eine Ende des Seils (12) oder Gestänges an der einen Schwenkklappe (8) und das andere Ende des Seiles (12) oder Gestänges an der anderen Schwenkklappe (9) festgelegt ist.

6. Fahrzeug nach einem der Ansprüche 1 bis 5, dadurch gekennzeichnet, dass die der Achse (3) des Strömungskanalrohres (2) zugekehrten Enden der Schwenkklappen (5, 6; 8, 9) zur Bildung von Grenzschichtzäunen (13, 14, 15, 16) abgewinkelt sind.

7. Fahrzeug anch Anspruch 6, dadurch gekennzeichnet, dass die Abwinkelung bei den Klappen (8, 9) des Lenksystems mehr als 90°, bevorzugt 103°, und bei den Klappen (5, 6) des Vortriebssystems im wesentlichen 90° beträgt.

8. Fahrzeug nach einem der Ansprüche 1 bis 7, dadurch gekennzeichnet, dass in dem Strömungskanalrohr (2) insbes. dachförmig ausgebildete Stabilisierungsflächen (19 bis 26) angeordnet sind, wobei der Dachfirst (27) bevorzugt radial zur Achse des Strömungskanalrohres (2) oder parallel zu einer Radialen verläuft.

9. Fahrzeug nach Anspruch 8, dadurch gekennzeichnet, dass der First (27) der Stabilisierungsflächen (19 bis 26) in Strömungsrichtung jeweils hinter den Schwenkachsen (17, 18; 10, 11) der Schwenkklappen des Vortriebs- und Lenksystems liegt.

10. Fahrzeug nach Anspruch 8 oder 9, dadurch gekennzeichnet, dass bei jenen dachförmigen Stabilisierungsflächen, deren First (27) unterhalb der Klappen (5, 6) des Vortriebssystems gelegen ist, eine Dachfläche (20, 22) mit der Strömungsrichtung (P) im Strömungskanalrohr (2) zusammenfällt.

11. Fahrzeug anch Anspruch 8, dadurch gekennzeichnet, dass die Stabilisierungsflächen (19 bis 26) schwenkbar an den Klappen (5, 6; 8, 9) im Abstand von deren Schwenkachsen (10, 11; 17, 18) angelenkt und an einem justierbaren, insbes. von einer Schraube (30) gebildeten Anschlag abstützbar sind.

**Revendications**

1. Véhicule avec un tube de canal de courant (de passage) (2), alimenté par au moins une hélice aérienne (1), embouchant dans un espace (canal) ouvert par le bas (fond) (7), s'étendant dans le sens longitudinal du véhicule, dont l'axe (3) est disposé essentiellement verticalement à l'axe longitudinal du véhicule (4), de même qu'un système de volets pivotants (5, 6), dont les axes pivotants (17, 18) sont situés symétriquement au plan central longitudinal du véhicule, pour la commande de la propulsion et un système de direction également formé par des volets pivotants (8, 9), le système de volets pivotants (5, 6) pour la commande de la propulsion, de même que les volets pivotants (8, 9) du système de direction étant situés dans le tube de canal de courant (de passage) (2), avec caractéristique que les deux volets pivotants (5, 6) de la commande de la propulsion sont orientables autour d'axes (17, 18), formant l'un avec l'autre un angle différant de 180°, en particulier un angle d'environ 150°.

2. Véhicule selon revendication 1, avec caractéristique que les volets orientables (8, 9) du système de direction sont pivotants en sens inverse autour de deux axes (10, 11) alignés l'un sur l'autre, qui sont essentiellement disposés dans le plan central longitudinal du véhicule.

3. Véhicule selon revendication 1 ou 2, avec caractéristique que les volets pivotants (8, 9) du système de direction sont orientables des mêmes angles (α) par rapport à leur position neutre [coïncidant avec la direction du courant dans le tube de canal de courant (2)].

4. Véhicule selon l'une des revendications 1 à 3, avec caractéristique que les volets orientables (5, 6) du système de commande de propulsion sont pivotants de leur position neutre (coïncidant avec la direction de courant dans le canal de courant) d'un angle en sens inverse de la direction d'avancement (β), angle, qui est inférieur à l'angle (γ), duquel il sont orientables de la position neutre dans la direction de l'avancement du véhicule.

5. Véhicule selon l'une des revendications 1 à 3, avec la caractéristique que les volets pivotants (8, 9) du système de direction sont actionnés par un câble (12) ou une tige entourant le semi-pourtour du tube du canal de courant (2), l'une des extrémités du câble (12) ou de la tige étant alors fixée à l'un des volets pivotants (8) et l'autre extrémité du câble (12) ou de la tige à l'autre volet pivotant (9).

6. Véhicule selon l'une des revendications 1 à 5, avec caractéristique que les extrémités des volets orientables (5, 6, 8, 9) adjacentes à l'axe (3) tu tube du canal de courant (2) sont pliées pour la formation de cloisons de décrochage (13, 14, 15, 16).

7. Véhicule selon revendication 6, avec caractéristique que le pliage pour les volets (8, 9) du système de direction est supérieur à 90°, de préférence 103°, et qu'il est essentiellement de l'ordre de 90° pour les volets (5, 6) du système de propulsion.

8. Véhicule selon l'une des revendications 1 à 7, avec caractéristique que des stabilisateurs (19 à 26), développés surtout en forme de toit sont disposés dans le tube de canal de courant (2), le faîte (27) allant de préférence radialement à l'axe du tube du canal de courant (2) ou parallèlement à une des radiales.

9. Véhicule selon revendication 8, avec caractéristique que le faîte (27) des stabilisateurs (19 à 26) dans la direction de courant se trouve derrière les axes orientables (17, 18, 10, 11) des volets pivotants des systèmes de propulsion et de direction.

10. Véhicule selon revendication 8 ou 9, avec caractéristique que pour ceux des stabilisateurs en forme de toit dont le faîte (27) se trouve au-dessous des volets (5, 6) du système de propulsion, un pan de comble (20, 22) coïncide avec la direction de courant (P) dans le tube de canal de courant (2).

11. Véhicule selon revendication 8, avec caractéristique que les stabilisateurs (19 à 26) orientables aux volets (5, 6, 8, 9) sont articulés à la distance de leurs axes orientables (10, 11, 17, 18) et qu'ils peuvent être appuyés à un arrêt ajustable formé surtout par une vis (30).

## Claims

1. Vehicle having a wind tunnel pipe (2) admitting the action of at least one propeller (1) and terminating in a space (channel) (7) open towards the bottom and extending in the longitudinal direction of the vehicle, with the axis (3) of the pipe (2) being arranged essentially vertically in relation to the longitudinal axis (4) of the vehicle, as well as a system of pivot flaps (5, 6) whose axes of rotation (17, 18) are positioned symmetrically in relation to the longitudinal central plane of the vehicle, for steering the propulsion and a steering system also consisting of pivot flaps (8, 9), with the pivot flap system (5, 6) for steering the propulsion and the pivot flaps (8, 9) of the steering system both being arranged in the wind tunnel pipe (2), characterized in that the two pivot flaps (5, 6) of the propulsion steering are pivotable around axes (17, 18) forming an angle deviating from 180°, in particular an angle of about 150°.

2. Vehicle according to claim 1, wherein the pivot flaps (8, 9) of the steering system are movable in opposite directions around two axes (10, 11) which are aligned with one another and arranged essentially in the longitudinal central plane of the vehicle.

3. Vehicle according to claim 1 or 2, wherein the pivot flaps (8, 9) of the steering system are pivotable in relation to their neutral position [coinciding with the direction of airflow in the wind tunnel pipe (2)] by identical angles ($\alpha$).

4. Vehicle according to any one of the claims 1 to 3, wherein the pivot flaps (5, 6) of the propulsion steering system are pivotable from their neutral position (coinciding with the direction of flow in the wind tunnel) by an angle (β) opposite to the advance direction, said angle (β) being smaller than the angle (γ) by which they are movable from their neutral position to the advance direction of the vehicle.

5. Vehicle according to any one of the claims 1 to 3, wherein the pivot flaps (8, 9) of the steering system are moved by means of a cable (12) or rod enclosing half of the outer periphery of the wind tunnel pipe (2), one end of the cable (12) or rod being fastened to one of the pivot flaps (8) and the other end of the cable (12) or rod being fastened to the other pivot flap (9).

6. Vehicle according to any one of the claims 1 to 5, wherein the ends of the pivot flaps (5, 6; 8, 9) facing the axis (3) of the wind tunnel pipe (2) are angled so as to form interface barriers (13, 14, 15, 16).

7. Vehicle according to claim 6, wherein the angling of the flaps (8, 9) of the steering system amounts to more than 90°, preferably 103° and the angling of the flaps (5, 6) of the propulsion system amounts to essentially 90°.

8. Vehicle according to any one of the claims 1 to 7, wherein in particular roof-shaped stabilising surfaces (19 to 26) are arranged in the wind tunnel pipe (2), the roof ridge (27) preferably extending radially in relation to the axis of the wind tunnel pipe (2) or parallel in relation to one of the radials.

9. Vehicle according to claim 8, wherein the ridge (27) of the stabilising surfaces (19 to 26) is positioned in flowing direction in each case behind the axes of rotation (17, 18; 10, 11) of the pivot flaps of the propulsion system and of the steering system.

10. Vehicle according to claim 8 or 9, wherein for those roof-shaped stabilising surfaces whose ridge (27) is positioned underneath the flaps (5, 6) of the propulsion system, a roof surface (20, 22) coincides with the flowing direction (P) in the wind tunnel pipe (2).

11. Vehicle according to claim 8, wherein the stabilising surfaces (19 to 26) are pivotally articulated to the flaps (5, 6; 8, 9) specially from their axes of rotation (10, 11; 17, 18) and are supportable on an adjustable stop in particular in the form of a screw (30).

FIG.5

β γ

P

6

18
27
21
22

FIG.6

α α

9

11
27
25 26

FIG.1

P 3 P
1
2
4

FIG.2

0 029 022

FIG.3

FIG.4

FIG.7

FIG.8

8

31    32

10                33

23              24

30    30

31    32

10

23              33

30        30    24

8

FIG.9

32                              8

33

24

0 029 022